# EUROPÄISCHE PATENTSCHRIFT

(11) **EP 2 601 730 B1**
(45) Veröffentlichungstag und Bekanntmachung des Hinweises auf die Patenterteilung: **30.07.2014**
(21) Anmeldenummer: 11749134.0
(22) Anmeldetag: 03.08.2011
(51) Int. Cl.: H02K 5/15, H02K 29/14

(54) **KOMPAKTE ELEKTRISCHE MASCHINE**
COMPACT ELECTRICAL MACHINE
MACHINE ÉLECTRIQUE COMPACTE

(30) Priorität: 03.08.2010 DE 102010033269
(43) Veröffentlichungstag der Anmeldung: 12.06.2013
(73) Patentinhaber: Schabmüller GmbH, 92334 Berching (DE)
(72) Erfinder: STUTZ, Werner, 85049 Ingolstadt (DE)
(74) Vertreter: Leske, Thomas
(86) Internationale Anmeldenummer: PCT/EP2011/063366
(87) Internationale Veröffentlichungsnummer: WO 2012/017007

(56) Entgegenhaltungen:
- EP-A1- 0 667 670
- DE-A1- 19 634 692
- GB-A- 266 780
- US-B1- 6 225 715

## Beschreibung

Die Erfindung betrifft eine elektrische Maschine, insbesondere die Lagerung des Rotors bei einer offenen elektrischen Maschine.

Elektrische Maschinen, welche elektrische Energie in Rotationsenergie bzw. Rotationsenergie in elektrische Energie umwandeln, sind aus dem Stand der Technik bekannt. Dabei ist unerheblich, ob die elektrische Maschine beispielsweise als Synchron- oder Asynchronmaschine ausgebildet ist. Derartige Maschinen weisen oftmals einen auf einer Welle sitzenden Rotor auf. Der Rotor bzw. die Welle ist drehbar in einem Stator gelagert, wobei die auf der Welle sitzenden Rotorlager über ein Lagerschild mit dem Stator verbunden sind. Als offene elektrische Maschinen werden solche Bauformen angesehen, bei welchen die elektrische Maschine nicht geschlossen bzw. gegenüber Feuchtigkeitseintritt abgedichtet ist.

Die bekannten Lagerschilder der elektrischen Maschinen sind dabei häufig derart ausgestaltet, dass ihre Stirnseite im Wesentlichen als ebene Fläche ausgebildet ist, in welcher zumindest eines der Rotorlager angeordnet ist. Wird beispielsweise für die Steuerung der elektrischen Maschine die Drehzahl des Rotors benötigt, so verlängert sich die axiale Baulänge der Maschine um den axialen Bauraum für einen Impulsgeber sowie dazugehörigen Sensor. Häufig wird der Sensor zu dessen Schutz zwischen dem Rotorlager und dem Rotor angeordnet. Dabei wird der Sensor häufig über eine Gewindebohrung am Umfang des Lagerschilds eingeschraubt. Wird der Durchmesser des Impulsgebers oder der elektrischen Maschine beispielsweise bei verschiedenen Baureihen verändert, müssen Drehzahlsensoren mit unterschiedlichen Längen vorgehalten werden, da der Sensor auf die entsprechende Kombination von Maschinen- und Impulsgeberdurchmesser abgestimmt ist.

Aus US 6,225,715 B1 ist ein Schrittmotor bekannt, welcher einen aus Stahlplatten aufgebauten Rotorkern ausweist. Der Rotorkern weist an den gegenüberliegenden Enden in Bereichen, welche keinen Einfluss auf das Drehmoment des Motors haben, eine Ausnehmung auf. Ein Teil des Motorgehäuses samt Rotorlager ist in dieser Ausnehmung angeordnet. Zudem weist der Schrittmotor einen Drehzahlsensor auf, welcher im freien Raum radial innerhalb der Wickelköpfen des Stators und axial außerhalb des Lagers angeordnet ist.

Diese Druckschrift offenbart eine:
Elektrische Maschine aufweisend
   - einen auf einer Welle angeordneten Rotor,
   - einen Stator,
   - ein mit dem Stator verbundenes Lagerschild, in welchem ein Rotorlager angeordnet ist, und
   - einen mit der Welle drehfest verbundenen Impulsgeber und einen ortsfest mit dem Lagerschild verbundenen Drehzahlsensor, wobei das Rotorlager zwischen dem Stator und dem Impulsgeber angeordnet ist, das Lagerschild derart axial in Richtung des Rotors einen Einzug aufweist, dass das Rotorlager radial innerhalb des Stators angeordnet ist und sich mit Teilbereichen des Rotors und des Stators axial überschneidet, wobei innerhalb des Einzugs der Impulsgeber angeordnet ist.

Ferner ist aus EP 0 667 670 A1 bekannt, das Lagerschild eines Elektromotors zur Verbesserung der Kühlung aus Speichen auszubilden, welche von der Aufnahme des Rotorlagers radial nach außen und axial nach innen verlaufen.

Somit besteht die Aufgabe der vorliegenden Erfindung, eine Sensoranordnung für einen Drehzahlsensor in einer elektrischen Asynchronmaschine bereitzustellen, welche die Baulänge der elektrischen Maschine nicht beeinflusst und bei welcher ein einheitlicher Drehzahlsensor für verschiedene Kombinationen von elektrischen Asynchromaschinen und Impulsgebern verwendbar ist.

Die Aufgabe wird durch eine elektrische Maschine gemäß Anspruch 1 gelöst. Weitere bevorzugte Fortbildungen der elektrischen Maschine sind den Unteransprüchen zu entnehmen.

Eine erfindungsgemäße elektrische Maschine ist eine Asynchronmaschine sie weist einen auf einer Welle angeordneten Rotor, einen Stator, ein mit dem Stator verbundenes Lagerschild, in welchem ein Rotorlager angeordnet ist, einen mit der Welle drehfest festverbundenen Impulsgeber und ein ortsfest mit dem Lagerschild verbundenen Drehzahlsensor auf. Das Rotorlager ist zwischen dem Stator und dem Impulsgeber angeordnet. Das Lagerschild weist axial in Richtung des Rotors einen Einzug, innerhalb dessen der Impulsgeber angeordnet ist, und an seiner Stirnseite Öffnungen auf, durch welche das Kühlmedium ausgetauscht wird.

Die Öffnungen an der Stirnseite dienen als Eintrittsöffnungen für das Kühlmittel. Das Lagerschild weist am Umfang weitere Öffnungen auf, welche als Luftaustrittsöffnungen dienen. Die Luftaustrittsöffnungen erstrecken sich beispielsweise in Umfangsrichtung oder axial am Umfang des Lagerschilds. Zur Unterstützung der Luftumwälzung weist der Rotor einen Kurzschlussring mit daran angeordneten insbesondere integral angeformten Flügeln auf. Im Betrieb der elektrischen Maschine bildet sich somit eine Luftströmung von der Stirnseite der elektrischen Maschine über den Kurzschlussring mit Ventilationsflügeln an zumindest Teilbereichen der Wickelköpfe vorbei zu den Luftaustrittsöffnungen aus. Durch entsprechende Gestaltung beispielsweise der Flügel ist auch eine Kühlmittelströmung in eine entgegengesetzte als die gerade beschriebene Richtung möglich.
Der Einzug im Lagerschild, welcher sich von einer Stirnseite des Lagerschilds bzw. der elektrischen Maschine in Richtung des Rotors erstreckt, kann verschiedene Formen wie beispielsweise eine konische Form oder eine Kröpfung aufweisen. Vorzugsweise ist der Einzug jedoch als eine Stufe ausgeführt, wobei die axiale Komponente des Einzugs im Wesentlichen parallel zur Drehachse des Rotors verläuft. Als Einzugsform sind ferner Kombinationen aus beispielsweise stufenartigen oder konischen Formen verwendbar, sodass beispielsweise eine treppenartige Form des gesamten Einzugs entsteht. Mit einer derartigen Form ist beispielsweise erreichbar, dass sich der Einzug entlang von Teilbereichen der Stirnseite von Stator bzw. Rotor erstreckt, insbesondere entlang der Wickelköpfe des Rotors bzw. beispielsweise dem Kurzschfussrings des Rotors. Der Einzug ist vorzugsweise derart dimensioniert, dass der Impulsgeber und/oder der Drehzahlsensor komplett vom Einzug aufgenommen werden, sodass sich die axiale Baulänge der elektrischen Maschine durch die Verwendung der Drehzahlsensorik nicht verlängert.

Der Einzug ist derart ausgebildet, dass der Lagersitz des Rotorlagers radial innerhalb des Stators und des Rotors oder Teilbereichen hiervon angeordnet ist. Dabei ist das Rotorlager axial überschneidend mit Teilbereichen des Rotors und/oder des Stators angeordnet. Es besteht eine axiale Überschneidung des Rotorlagers bzw. des Lagersitzes mit den Wickelköpfen des Stators sowie mit dem Kurzschlussring und daran angeordneten Flügeln. Bei einer solchen Anordnung wird durch den Einzug ein maximaler Bauraum für die Drehzahlsensorik geschaffen.

Der Einzug ist zumindest an einer der beiden Stirnseiten der elektrischen Maschine angeordnet, sodass zumindest Bauraum für eine Drehzahlsensorik bereitgestellt wird. Es besteht jedoch auch die Möglichkeit, aus Gründen der einheitlichen Bauteilgestaltung oder der Flexibilität beidseitig ein Lagerschild mit Einzug anzuordnen. Bei einer solchen Ausgestaltung sind auch beidseitig Impulsgeber auf der Welle bzw. Drehzahlsensoren im Lagerschild anbringbar. Durch die Verwendung von zwei Drehzahlsensoren wird beispielsweise in Bezug auf die Sicherheit ein redundantes System zur Drehzahlerfassung geschaffen, oder es sind zwei ggf. unterschiedlich aufbereitete Signale für unterschiedliche Aufgaben verwendbar.

Die Drehzahlsensoren sind vorzugsweise derart in das Lagerschild integriert, dass die axiale Baulänge des Lagerschilds und somit der gesamten elektrischen Maschine nicht vergrößert wird. Dazu ist beispielsweise der Drehzahlensensor ebenfalls in den axialen Einzug integrierbar. In einer alternativen Ausführungsform sind die stirnseitigen Öffnungen derart ausgestaltet, dass durch sie Bauraum für den Drehzahlsensor bereitgestellt wird.

Durch die Anordnung des Rotorlagers zwischen dem Stator und dem Impulsgeber wird eine gute Zugänglichkeit der Drehzahlsensorik ermöglicht. Dies ist beispielsweise bei der Montage/Justierung sowie beim Austausch und der Wartung der Drehzahlsensorik von Vorteil. Ferner bietet die hier vorgeschlagene Anordnung der Drehzahlsensorik eine hohe Flexibilität in Bezug auf die Verwendung von verschiendenen Impulsgebern sowie den Einbau der Drehzahlsensorik in elektrische Maschinen verschiedener Baugrößen bzw. Durchmesser. Durch die Anbringung der Sensorik im Einzug und ggf. in der Öffnung, welche stirnseitig zugänglich sind, wird durch entsprechende Gestaltung der Aufnahme bzw. des Sensors eine Fixierung in verschiedenen radialen Positionen ermöglicht. Somit ist auf einfache Art und Weise der Einbau von Impulsgebem mit unterschiedlichem Durchmesser in eine Maschine möglich, ohne dass die Baulänge des Drehzahlsensors verändert werden muss. Ein Ausgleich erfolgt durch radiales Verschieben und Fixieren des Drehzahlsensors. Ebenso ist ein und derselbe Sensor bei verschiedenen Durchmessern der elektrischen Maschine verwendbar. Dabei kann der Drehzahlsensor radial in einer beliebigen Position, entsprechend dem verwendeten Impulsgeber, positioniert werden. Eine solche Flexibilität besteht bei bekannten Systemen nicht, da hier der Drehzahlsensor am Umfang des Lagerschilds eingeschraubt wird und somit über seine Länge der Abstand von Lagerschildaußendurchmesser zu Impulsgeber vorbestimmt ist. Zur Veränderung dieses Abstands müsste ein Drehzahlsensor mit anderer Länge verwendet werden.

Ferner sind die Öffnungen in der Stirnseite des Lagerschilds von einem Kühlmedium durchströmbar. Als Kühlmedium dient bei elektrischen Maschinen vorzugsweise Luft, wobei auch weitere, aus dem Stand der Technik bekannte Kühlmedien verwendbar sind. Um einen möglichst großen Luftdurchsatz zu ermöglichen, geben die stirnseitigen Öffnungen einen möglichst großen Öffnungsquerschnitt frei. Zudem sind die Öffnungen vorzugsweise strömungsgünstig ausgestaltet.

In einer bevorzugten Ausführungsform sind zumindest Teilbereiche der Stirnseite als speichenförmige Stege ausgebildet. Diese Stege, in welche der Einzug integriert ist, verlaufen vom Lagerschild in radialer Richtung nach außen. Für den Fachmann ist es selbstverständlich, dass sich die Stege im Bereich des Einzugs auch in axialer Richtung erstrecken. Zwischen diesen Stegen erstreckt sich die Öffnung in der Stirnseite des Lagerschilds. Weiter vorzugsweise sind an der Stirnseite vier Stege ausgebildet. Diese Stege sind gleichmäßig beabstandet, wodurch ein Winkel von 90° zwischen zwei benachbarten Stegen besteht.

Zur weiteren Verbesserung der Zirkulation des Kühlmediums weist vorzugsweise der Impulsgeber weitere Ventilationsöffnungen auf. Durch die Ventilationsöffnungen wird die Durchtrittsfläche von Kühlmedium an der Stirnseite der elektrischen Maschine vergrößert. Weiter vorzugsweise sind die Ventilationsöffnungen strömungsoptimiert ausgestaltet. Durch die Gestaltung der Kontur wird der Strom des Kühlmediums auf bestimmte Bereiche des Rotors und/oder des Stators geleitet. Ferner ist beispielsweise durch eine Kontur längs der Strömungsrichtung in Form einer Venturi-Düse eine Beschleunigung des Strömungsmediums erzielbar, was zu einer höheren Strömungsgeschwindigkeit beim Durchströmen des Lagerschilds führt.

Der Drehzahlsensor ist vorzugsweise als induktiver Sensor ausgebildet, wobei als Impulsgeber ein Zahnrad verwendbar ist. Alternativ ist jedoch auch beispielsweise ein kapazitiver oder ein optischer Sensor verwendbar. In Bezug auf das Funktionsprinzip der Sensorik bestehen nur insoweit Einschränkungen, als dass die Sensorik in erfindungsgemäßer Weise in einem Einzug im Lagerschild angeordnet sein muss. Weiter vorzugsweise sind über den Drehzahlsensor auch die Drehrichtung und/oder die Drehposition der Welle und damit des Rotors bestimmbar.

Weitere Merkmale und Vorteile der Erfindung ergeben sich aus dem nachfolgenden Ausführungsbeispiel in Verbindung mit den Figuren. Dabei zeigt:
- Figur 1: eine erfindungsgemäße elektrische Maschine;
- Figur 2: eine Schnittdarstellung einer elektrischen Maschine gemäß Figur 1; und
- Figur 3: einen Impulsgeber in räumlicher Ansicht.

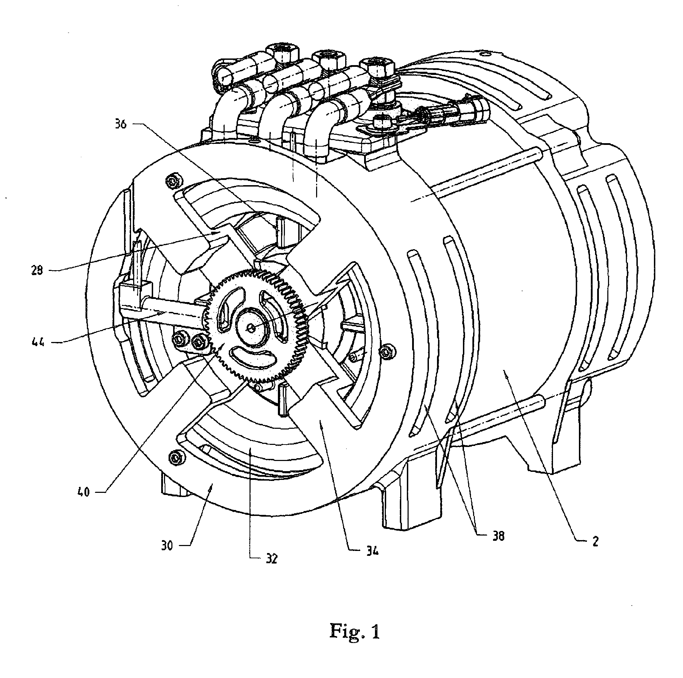

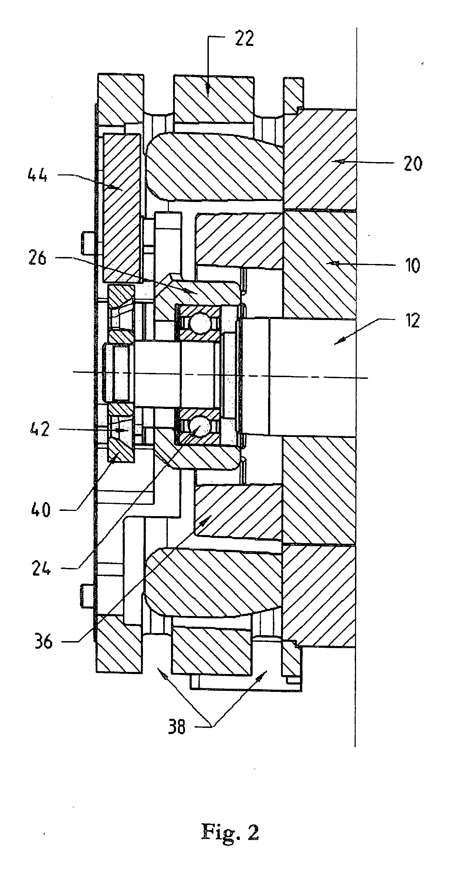

In den Figuren 1 und 2 ist eine bevorzugte Ausführungsform einer erfindungsgemäßen elektrischen Maschine gezeigt, wobei in Figur 1 eine perspektivische Darstellung und Figur 2 eine Schnittdarstellung gezeigt ist. Die erfindungsgemäße elektrische Maschine 2 weist einen auf einer Welle 12 sitzenden Rotor 10 auf, welcher derart gelagert ist, dass er gegenüber dem Stator 20 verdrehbar ist. Durch Anlegen einer entsprechenden Spannung an den im Stator 20 angeordneten Statorspulen ist der Rotor in beide Drehrichtungen antreibbar.

Die Lagerung der Welle 12 bzw. des Rotors 10 ist über zwei, an den jeweiligen Stirnseiten des Rotors 10 angeordneten Rotorlagem 24 realisiert. Die beiden Rotorlager 24 sind jeweils in einem Lagersitz 26 eines Lagerschildes 22 angeordnet, wobei der Stator 20 an jeder seiner beiden Stirnseiten ein Lagerschild 22 aufweist.

Zur Steuerung der elektrischen Maschine 2, insbesondere von elektrischen Maschinen 2, welche bei variierenden Drehzahlen bzw. Lasten betrieben werden, wird ein Drehzahlsensor 44 verwendet. Über diesen Drehzahlsensor 44 wird sowohl die Drehzahl als auch die Drehrichtung der Welle 12 bzw. des Rotors 10 detektiert. Als Impulsgeber 40 für den Drehzahlsensor 44 dient ein mit der Welle 12 drehfest verbundenes Zahnrad 40. Der Drehzahlsensor 44 tastet dieses Zahnrad 40 induktiv ab, wodurch der Drehzahlsensor 44 die Drehzahl und die Drehrichtung ermittelt und diesbezügliche Signale an die elektronische Steuerung der elektrischen Maschine 2 weiterleitet.

Das Lagerschild 22 weist zur Aufnahme des Zahnrads 40 einen Einzug 28 auf. Der Einzug 28 ist derart ausgestaltet, dass der Lagersitz 26 und somit das Rotorlager 24 radial innerhalb der Wickelköpfe des Stators 20 sowie des Kurzschlussrings des Rotors 10 und axial überschneidend mit diesen angeordnet sind. Aufgrund dieser in Richtung des Rotors 10 hineingezogenen Anordnung des Rotorlagers weist das Lagerschild 22 einen Einzug 28 auf, in welchem das Zahnrad 40 auf der Welle 12 angeordnet ist. Somit wird die axiale Baulänge der elektrischen Maschine 2 durch das Anbringen des Zahnrads 40 nicht vergrößert. Das Lagerschild 22 ist derart ausgestaltet, dass vom Lagersitz 26 vier Stege 34 radial nach außen weisen. Diese Stege 34 können aufgrund ihrer Ausbildung auch als Speichen bezeichnet werden. Durch die Ausbildung der Stege 34 weist das Lagerschild 22 an seiner Stirnseite 30 Öffnungen 32 auf, welche sich zwischen den einzelnen Stegen 34 erstrecken. Diese Öffnungen 32 bieten genügend Bauraum, dass in einer der Öffnungen 32 der Drehzahlsensor 44 angeordnet werden kann. Es ist auch möglich, dass an den Stegen Anbauteile bzw. Komponenten angebracht sind wie z. B. Elektromagnetbremsen (beim beschriebenen Ausführungsbeispiel nicht enthalten). Der Drehzahlsensor 44 ist dabei derart mit dem Lagerschild 22 verbunden, dass er insbesondere in radialer Richtung veränderbar und somit ausrichtbar ist. Somit ist das Zahnrad 40 in einfacher Weise austauschbar bzw. in seiner Größe veränderbar, ohne dass der Drehzahlsensor 44 ausgetauscht werden muss.

Die an der Stirnseite 30 des Lagerschilds 22 angeordneten Öffnungen 32 dienen ferner der Durchströmung mit Kühlmedium, insbesondere Luft. Dieser Austausch von Kühlmedium dient insbesondere zur Kühlung der Wickelköpfe des Stators 20 bzw. des Kurzschlussrings des Rotors 10. Die Durchströmung mit Kühlmedium wird dabei von an dem Kurzschlussring angeordneten Flügeln 36 unterstützt. Zusätzlich zu den Öffnungen 32 an der Stirnseite 30 des Lagerschilds 20 weist das Lagerschild am Umfang angeordnete Luftaustrittsöffnungen 38 auf. Somit bildet sich eine Strömung des Kühlmediums derart aus, dass Luft über die Öffnungen des Lagerschilds 32 angesaugt wird und über die Austrittsöffnungen 38 ausströmt. Diese Strömung wird ferner durch Ventilationsöffnungen 42 im Zahnrad 40 begünstigt. Zum Einen wird durch die Ventilationsöffnungen 42 der Einströmquerschnitt vergrößert, und zum Anderen sind die Ventilationsöffnungen 42 derart ausgestaltet, dass der Strömungswiderstand der durchströmenden Luft reduziert wird. Die Querschnittsfläche der Ventilationsöffnung 42 vergrößert sich dabei in Durchströmungsrichtung. Insbesondere die Außenkontur der Querschnittsfläche ist dabei in Form einer Venturi-Düse ausgebildet, so dass sich die Strömungsgeschwindigkeit beim Durchströmen des Lagerschilds 22 erhöht.

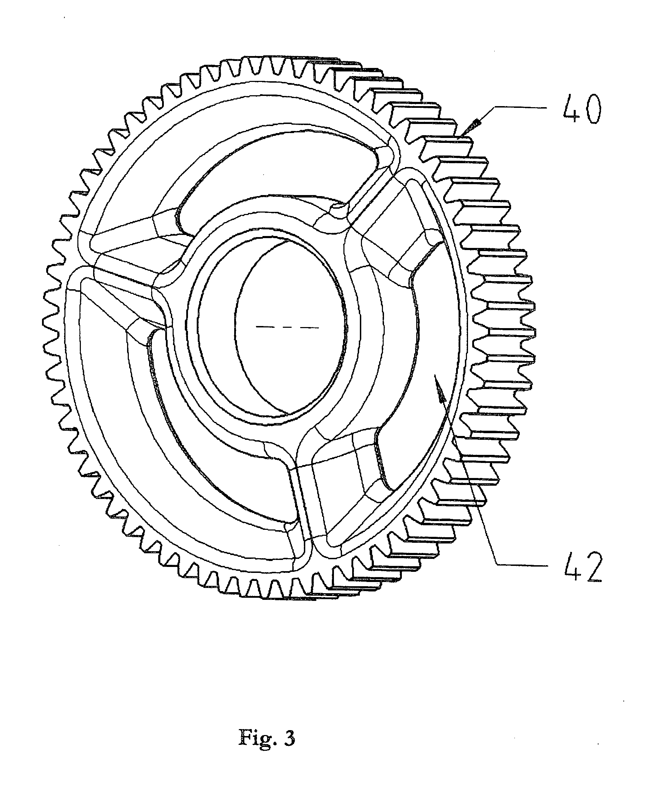

In Figur 3 ist ein Impulsgeber 40 in Form eines Zahnrades in räumlicher Ansicht dargestellt. Gezeigt sind drei speichenartige Streben, welche relativ große Zwischenräume lassen, welche - wie oben beschrieben - Ventilationsöffnungen 42 aufweisen, welche einen relativ großen Durchströmquerschnitt aufweisen, damit die Gesamtdurchströmquerschnitte im Bereich der Stirnseite des Elektromotors, d. h. im Lagerschild und im als Zahnrad ausgebildeten Impulsgeber möglichst groß sind. Dadurch wird die Kühlwirkung im Motor verbessert, ohne dass die Stabilität des Impulsgebers verloren geht, welche für die Messgenauigkeit von Bedeutung ist.

### Bezugszeichenliste

- 2: elektrische Maschine
- 10: Rotor
- 12: Welle
- 20: Stator
- 22: Lagerschild
- 24: Rotorlager
- 26: Lagersitz
- 28: Einzug
- 30: Stirnseite des Lagerschilds
- 32: Öffnung des Lagerschilds
- 34: Steg
- 36: Flügel
- 38: Luftaustrittsöffnungen
- 40: Impulsgeber
- 42: Ventilationsöffnung
- 44: Drehzahlsensor

## Patentansprüche

1. Elektrische Asynchronmaschine, (2) aufweisend:
■ einen auf einer Welle (12) angeordneten Rotor (10) mit einem Kurzschlussring und an dem Kurzschlussring angeordneten Flügeln (36),
■ einen Stator (20),
■ ein mit dem Stator (20) verbundenes Lagerschild (22), in welchem ein Rotorlager (24) angeordnet ist, und
■ einen mit der Welle (12) drehfest verbundenen Impulsgeber (40) und einen ortsfest mit dem Lagerschild (22) verbundenen Drehzahlsensor (44),
wobei das Rotorlager (24) zwischen dem Stator (20) und dem Impulsgeber (40) angeordnet ist, das Lagerschild (22) derart axial in Richtung des Rotors (10) einen Einzug (28) aufweist, dass das Rotorlager (24) radial innerhalb des Stators (20) angeordnet ist und das Rotorlager (24) bzw. der Lagersitz (26) sich mit dem Kurzschlussring des Rotors (10) und daran angeordneten Flügeln (36) sowie mit Wickelköpfen des Stators (20) axial überschneidet, innerhalb des Einzugs (28) der Impulsgeber (40) angeordnet ist und die Stirnseite (30) des Lagerschilds (22) Öffnungen (32) aufweist, durch welche Kühlmedium ausgetauscht wird, und wobei das Lagerschild (22) am Umfang angeordnete Luftaustrittsöffnungen (38) aufweist.

2. Elektrische Maschine (2) nach Anspruch 1, **dadurch gekennzeichnet, dass** der Einzug (28) im Lagerschild (22) als eine Stufe ausgebildet ist.

3. Elektrische Maschine (2) nach Anspruch 1 oder 2, **dadurch gekennzeichnet, dass** das Lagerschild (22) Stege (34) aufweist, welche sich vom Lagersitz (26) des Rotorlagers (24) radial nach außen erstrecken und zwischen welchen die Öffnungen (32) ausgebildet sind.

4. Elektrische Maschine (2) nach Anspruch 3, **dadurch gekennzeichnet, dass** das Lagerschild (22) vier gleichmäßig beabstandete Stege (34) aufweist.

5. Elektrische Maschine (2) nach einem der vorherigen Ansprüche, **dadurch gekennzeichnet, dass** der Impulsgeber (40) Ventilationsöffnungen (42) zur Durchströmung von Kühlmedium aufweist.

6. Elektrische Maschine (2) nach einem der vorherigen Ansprüche, **dadurch gekennzeichnet, dass** der Impulsgeber (40) strömungsunterstützende Elemente aufweist.

7. Elektrische Maschine (2) nach einem der vorherigen Ansprüche, **dadurch gekennzeichnet, dass** der Impulsgeber (40) ein Zahnrad und der Drehzahlsensor (44) ein induktiver Sensor ist.

8. Elektrische Maschine (2) nach einem der vorherigen Ansprüche, **dadurch gekennzeichnet, dass** der Drehzahlsensor (44) eine Einrichtung zur Drehrichtungserkennung und/oder Drehpositionsbestimmung der Welle (12) aufweist.

## Claims

1. Asynchronous electric machine (2) having:
■ a rotor (10) arranged on a shaft (12) and comprising a short-circuiting ring and vanes (36) arranged on the short-circuiting ring,
■ a stator (20),
■ an end plate (22), which is connected to the stator (20) and in which a rotor bearing (24) is arranged, and
■ a pulse generator (40), which is connected to the shaft (12) in rotationally fixed fashion, and a speed sensor (44), which is connected, fixed in position, to the end plate (22),
wherein the rotor bearing (24) is arranged between the stator (20) and the pulse generator (40), the end plate (22) has an indentation (28) axially in the direction of the rotor (10) in such a way that the rotor bearing (24) is arranged radially inside the stator (20) and the rotor bearing (24) or the bearing seat (26) overlaps axially with the short-circuiting ring of the rotor (10) and vanes (36) arranged thereon and with end windings of the stator (20), wherein the pulse generator (40) is arranged within the indentation (28), and the end side (30) of the end plate (22) has openings (32) through which cooling medium is exchanged, and wherein the end plate (22) has air outlet openings (38) arranged over the circumference.

2. Electric machine (2) according to Claim 1, **characterized in that** the indentation (28) in the end plate (22) is in the form of a step.

3. Electric machine (2) according to Claim 1 or 2, **characterized in that** the end plate (22) has webs (34), which extend radially outwards from the bearing seat (26) of the rotor bearing (24) and between which the openings (32) are formed.

4. Electric machine (2) according to Claim 3, **characterized in that** the end plate (22) has four uniformly spaced-apart webs (34).

5. Electric machine (2) according to one of the preceding claims, **characterized in that** the pulse generator (40) has ventilation openings (42) through which cooling medium can flow.

6. Electric machine (2) according to one of the preceding claims, **characterized in that** the pulse generator (40) has flow-assisting elements.

7. Electric machine (2) according to one of the preceding claims, **characterized in that** the pulse generator (40) is a gearwheel and the speed sensor (44) is an inductive sensor.

8. Electric machine (2) according to one of the preceding claims, **characterized in that** the speed sensor (44) has a device for rotation direction identification and/or rotary position determination of the shaft (12).

## Revendications

1. Machine électrique asynchrone (2), présentant :
- un rotor (10) disposé sur un arbre (12), avec une bague de court-circuit et des ailettes (36) disposées sur la bague de court-circuit,
- un stator (20),
- un flasque de palier (22) connecté au stator (20), dans lequel est disposé un palier de rotor (24), et
- un générateur d'impulsions (40) connecté de manière solidaire en rotation à l'arbre (12), et un capteur de vitesse de rotation (44) connecté fixement au flasque de palier (22),
le palier de rotor (24) étant disposé entre le stator (20) et le générateur d'impulsions (40), le flasque de palier (22) présentant, axialement dans la direction du rotor (10), un renfoncement (28) tel que le palier de rotor (24) soit disposé radialement à l'intérieur du stator (20) et que le palier de rotor (24) ou le siège de palier (26) intersecte axialement la bague de court-circuit du rotor (10) et les ailettes (36) disposées sur celui-ci ainsi que des têtes de bobinage du stator (20), le générateur d'impulsions (40) étant disposé à l'intérieur du renfoncement (28) et le côté frontal (30) du flasque de palier (22) présentant des ouvertures (32) à travers lesquelles un réfrigérant est échangé, et le flasque de palier (22) présentant des ouvertures de sortie d'air (38) disposées sur la périphérie.

2. Machine électrique (2) selon la revendication 1, **caractérisée en ce que** le renfoncement (28) dans le flasque de palier (22) est réalisé sous forme d'épaulement.

3. Machine électrique (2) selon la revendication 1 ou 2, **caractérisée en ce que** le flasque de palier (22) présente des nervures (34) qui s'étendent radialement vers l'extérieur depuis le siège de palier (26) du palier de rotor (24) et entre lesquelles sont réalisées les ouvertures (32).

4. Machine électrique (2) selon la revendication 3, **caractérisée en ce que** le flasque de palier (22) présente quatre nervures (34) espacées uniformément.

5. Machine électrique (2) selon l'une quelconque des revendications précédentes, **caractérisée en ce que** le générateur d'impulsions (40) présente des ouvertures de ventilation (42) pour l'écoulement de réfrigérant.

6. Machine électrique (2) selon l'une quelconque des revendications précédentes, **caractérisée en ce que** le générateur d'impulsions (40) présente des éléments favorisant l'écoulement.

7. Machine électrique (2) selon l'une quelconque des revendications précédentes, **caractérisée en ce que** le générateur d'impulsions (40) est une roue dentée et le capteur de vitesse de rotation (44) est un capteur à induction.

8. Machine électrique (2) selon l'une quelconque des revendications précédentes, **caractérisée en ce que** le capteur de vitesse de rotation (44) présente un dispositif pour reconnaître le sens de rotation et/ou pour déterminer la position de rotation de l'arbre (12).
